# EUROPÄISCHE PATENTSCHRIFT

(11) **EP 0 714 568 B1**
(45) Veröffentlichungstag und Bekanntmachung des Hinweises auf die Patenterteilung: **22.10.1997**
(21) Anmeldenummer: 94921592.5
(22) Anmeldetag: 23.07.1994
(51) Int. Cl.: H02P 7/00

(54) **VORRICHTUNG ZUR ANSTEUERUNG EINES LEISTUNGSSTELLELEMENTS EINER ANTRIEBSEINHEIT EINES FAHRZEUGS**
DEVICE FOR DRIVING A POWER CONTROLLING ELEMENT OF A VEHICLE DRIVING UNIT
DISPOSITIF DE COMMANDE POUR UN ELEMENT DE REGULATION DE PUISSANCE D'UNE UNITE D'ENTRAINEMENT D'UN VEHICULE

(30) Priorität: 16.08.1993 DE 4327483
(43) Veröffentlichungstag der Anmeldung: 05.06.1996
(73) Patentinhaber: ROBERT BOSCH GMBH, 70442 Stuttgart (DE)
(72) Erfinder: BOLL, Leonhard, D-74372 Sersheim (DE); ZELLER, Thomas, D-71254 Ditzingen (DE); MÜLLER, Klaus, D-71679 Asperg (DE)
(86) Internationale Anmeldenummer: DE9400858
(87) Internationale Veröffentlichungsnummer: WO9505704

(56) Entgegenhaltungen:
- EP-A- 0 060 331
- EP-A- 0 291 803
- WO-A-88/00770
- US-A- 4 703 238
- US-A- 5 264 767
- ELEKTRONIK., Bd.40, Nr.15, Oktober 1991, MUNCHEN DE Seiten 106 - 109, XP000246076 HERBERT SAX 'Gleichstrommotoren kostenoptimiert gesteuert'

## Beschreibung

### Stand der Technik

Die Erfindung betrifft eine Vorrichtung zur Ansteuerung der Drosselklappe einer Antriebseinheit eines Fahrzeugs.

Eine derartige Vorrichtung ist aus der DE-OS 36 25 091 (US-PS 4 951 188) bekannt. Dort wird zur Ansteuerung eines Leistungsstellelements, insbesondere einer Drosselklappe im Rahmen eines elektronischen Gaspedalsystems, eine Vollbrückenschaltung bestehend aus vier betätigbaren Schaltelementen vorgeschlagen, welche durch wenigstens ein impulsförmiges Ansteuersignal ansteuerbar sind. Dabei ist der Verbraucher, der elektrische Motor, der mit dem Leistungsstellelement verbunden ist, in der Brückendiagonale angeordnet, wobei zur Betätigung des Motors in die erste Drehrichtung im Sinne einer Öffnung des Leistungsstellelements zwei diagonal gegenüberliegende Schaltelemente geschlossen werden, bei einer Betätigung in die zweite Drehrichtung die jeweils beiden anderen diagonal gegenüberliegenden Schaltelemente betätigt werden. Diesen Bestromungsphasen, in denen das Ansteuersignal einen aktiven Pegel aufweist, steht die sogenannte Freilaufphase gegenüber, in der das Ansteuersignal einen inaktiven Pegel aufweist und während der keines der Schaltelemente angesteuert wird. Durch die getaktete Ansteuerung des Leistungsstellelements, bestehend aus Bestromungs- und Freilaufphase, wird ein mittlerer Strom durch den Verbraucher erzeugt, welcher den Verbraucher gegen eine rückstellende Kraft in der vom elektronischen Gaspedalsystem vorgegebene Position hält.

Um die Endstufe kurzschlußfest zu machen, wird durch einen Meßwiderstand im Bereich des Masseanschlusses der Vollbrücke der durch die gesamte Brücke und durch den Verbraucher fließende Strom erfaßt. Dieser Strom wird mit einem vorgegebenen Maximalwert verglichen und bei Überschreiten des Maximalwerts die Ansteuerung auf ein Tastverhältnis von 1 % reduziert, bei Unterschreiten wiederaufgenommen. Als Maximalstromwert ist dabei ein Stromwert festgelegt, der bei einem Kurzschluß des Verbrauchers mindestens durch die Brücke fließen würde. Durch die Reduzierung der Ansteuerung bei Überschreiten des Schwellwertes ist die bekannte Endstufe gegen Kurzschlüsse geschützt und somit kurzschlußfest. Durch die Reduzierung der Ansteuerung auf ein Tastverhältnis von 1 % ergeben sich im Kurzschlußfall starke Stromschwankungen bei Über- und Unterschreiten der Schwelle, die ein unbefriedigendes Verhalten des Steuersystems nach sich ziehen.

Bei der Ansteuerung eines Leistungsstellelements, insbesondere einer Drosselklappe, mit einem Gleichstrommotor sind Mechanik des Stellelements und Steuergeräteelektronik aufeinander abzustimmen. Dabei treten entgegengesetzte Forderung auf. Es sind vorgegebene Maximalverstellzeiten für das Leistungsstellement einzuhalten, es ist ein vorgegebenes Überschußmoment des Antriebs im Falle von Schwergängigkeit oder Vereisung des Stellelements bereitzustellen, der Gleichstrommotor soll mit einem möglichst kleinen Strom in einer vorgegebenen Position gehalten werden, es soll möglichst geringe Bordnetzspitzenbelastung erzeugt werden und zuletzt soll die ansteuernde Endstufe kurzschlußfest ausgelegt und auf einfache Weise integrierbar sein, d.h. der von der Endstufe geforderte Maximalstrom sollte möglichst gering sein.

Bei der bekannten, kurzschlußfesten Endstufe werden nicht alle diese Forderungen erfüllt. Um eine möglichst kurze Verstellzeit zu erreichen, wird bei der bekannten Endstufe ein Maximalstrom bis zum Kurzschlußstrom zugelassen. Dies führt auch zu einem hohen Überschußmoment. Allerdings erzeugt der eingesetzte Gleichstrommotor bei Änderungen der Ansteuerung, insbesondere beim Verstellvorgang während seiner Beschleunigung und Bremsung hohe Ströme oder Stromspitzen. Dadurch wird das Bordnetz des Kraftfahrzeugs stark belastet, so daß große Spannungseinbrüche und Abfälle die Folge sein können. Ferner wird eine sehr leistungsstarke, nur schwer integrierbare Endstufe, mit der entsprechende Kosten verbunden sind, gefordert.

Die bekannte Endstufe kann somit die gegensätzlichen Forderungen an eine Endstufe zur Ansteuerung eines Gleichstrommotors nicht zufriedenstellend erfüllen.

Würde eine leistungsschwächere Endstufe zur Steuerung des elektrischen Verbrauchers bzw. Motors eingesetzt werden, würde der bekannte Kurzschlußschutz bei normaler Verstellung infolge der Strom- bzw. Spannungsspitzen beim Steuern des Verbrauchers bzw. Verstellen eines Gleichstrommotors eingreifen und den Antrieb quasi abschalten.

Es ist daher Aufgabe der Erfindung, eine Vorrichtung zur Ansteuerung eines Leistungsstellelements einer Antriebseinheit anzugeben, bei der die gegensätzlichen Forderungen so gut wie möglich erfüllt werden, insbesondere die Bordnetzbelastung möglichst gering ist, ohne daß anderen Eigenschaften des Ansteuersystems, insbesondere die notwendige Verstellzeit, wesentlich beeinträchtigt werden.

Dies wird durch die Vorrichtung nach Anspruch 1 erreicht.

Die erfindungsgemäße Vorrichtung stellt eine Vollbrückenendstufe zur Ansteuerung eines Gleichstrommotors, bei der einerseits durch Überwachung der Ströme durch die einzelnen Transistoren der Endstufe auf Überschreiten eines maximalen Kurzschlußstromwertes und Abschalten der Endstufe im Kurzschlußfall die Kurzschlußfestigkeit hergestellt wird, andererseits der Strom durch die Vollbrückenendstufe auf einen vorgegebenen Grenzwert begrenzt wird und zur Begrenzung das impulsförmige Ansteuersignal so getaktet wird, daß die Überschreitung des Grenzwerts verhindert wird. Dieser Grenzwert ist dabei betragsmäßig kleiner als der Spitzenwerte der im Normalbetrieb auftretenden Stromspitzen beim Verstellvorgang, insebsondere der Einschalt-und der Reversierstromspitze. Ergebnis ist demnach eine Begrenzung des Strom durch den Verbraucher in jedem Betriebszustand, nicht nur im Fehlerfall, auf den vorgegebenen Grenzwert, wobei der Grenzstrom in engen Grenzen eingehalten wird. .

Aus der DE-OS 37 18 309 ist bekannt, in der Freilaufphase einer Vollbrückenendstufe zur Ansteuerung eines Leistungsstellelements einer Antriebseinheit zwei gegenüberliegende Schaltelemente zu betätigen.

Auf den Seiten 106 bis 109 der Ausgabe Band 40, Nr. 21, Oktober 1991 der Fachzeitschrift "Elektronik", München, DE, wird eine Vorrichtung zur Ansteuerung eines Leistungsstellelements beschrieben. Diese weist eine Vollbrückenendstufe auf, deren Schaltelemente mittels wenigstens eines impulsförmigen Signals angesteuert werden. Die Vollbrückenendstufe ist mit einer Strombegrenzung versehen, die bei Überschreiten eines voreingestellten Grenzwertes durch Ausblenden der Ansteuerung den Motorstrom auf diesen Grenzwert begrenzt. Maßnahmen zur Erkennung von Kurzschlüssen der einzelnen Schaltelemente werden nicht beschrieben.

Aus der EP-A 0 060 331 ist eine Vollbrückenendstufe für einen Gleichstromsteller bekannt, bei welchem jedem Schaltelement eine Kurzschlußüberwachung zugeordnet ist. Bei einem der Schaltelemente wird dieses bis zum nächsten Einschaltimpuls ausgeschaltet. Liegt der Kurzschluß eine bestimmte Zeit lang an, so wird durch Vergleich des durch den Steller fließenden Stromes mit einem Sollwert ein Fehlerzustand erkannt und die Endstufe abgeschaltet. Maßnahmen zur Strombegrenzung sind nicht vorgesehen. Außerdem ist die Art und Weise des Kurzschlußschutzes für Anwendungen bei der Steuerung einer Drosselklappe und somit der Leistung einer Antriebseinheit nicht befriedigend.

### Vorteile der Erfindung

Durch die erfindungsgemäße Vorgehensweise werden die obengenannten gegensätzlichen Forderungen erfüllt.

Durch die erfindungsgemäße Vorrichtung werden die gegenläufigen Forderungen in optimaler Weise miteinander verbunden, da durch die Strombegrenzung die Bordnetzbelastung bei Verstellvorgängen möglichst gering gehalten werden kann, ohne daß die Verstellzeit wesentlich geringer wird. Dadurch kann die Stellelementemechanik (Getriebe, Rückstellfedern, Motor) mit Blick auf Verstellzeit und Haltestrom optimiert werden.

Desweiteren ist vorteilhaft, daß die Endstufe selbst nicht auf den maximal zulässigen Strom des Motors sondern auf den vorgegebenen Stromgrenzwert ausgelegt werden kann, demnach nicht so leistungsstark ausfällt und somit billiger wird.

Dadurch, daß im Bereich der Endstufe und im elektrischen Motor ein eindeutiger Maximalstrom vorgegeben ist, können kleinere Drahtquerschnitte im Bereich der Endstufe und des Gleichstrommotors gewählt werden, was ebenfalls die Kosten reduziert.

Durch die erfindungsgemäße Vorgehensweise werden hohe Stromspitzen beim Verstellvorgang vermieden, so daß Spannungseinbrüche in der Steuergeräteversorgung im wesentlichen vermieden werden können. Die Bordnetzbelastung ist somit wesentlich niedriger.

Ferner ist es möglich, kosten beim Gleichstrommotor selbst einzusparen und diesen kleiner auszulegen.

Besondere Bedeutung hat die erfindungsgemäße Vorgehensweise durch die einfache Integrierbarkeit der Endstufe. Durch die Verwendung leistungsschwächerer Bauelemente und die Begrenzung des durch den Baustein fliessenden Strom wird die Integration des Bausteins infolge der verminderten Verlustleistung erst ermöglicht. Dabei kann auf umfangreiche Kühlmaßnahmen für den Baustein verzichtet werden.

Besondere Bedeutung weist der erfindungsgemäße Gegenstand bei der Gewährleistung der Betriebssicherheit auf. Fehlerströmen, insbesondere Kurzschlußströmen, die durch Kurzschluß durch den elektrischen Verbraucher (Kurzschluß nach Plus) entstehen, wird durch die Begrenzung des Stromes durch den Verbraucher auf den Grenzwert begegnet. Da diese Maßnahme beispielsweise bei einem Kurzschluß eine Verbraucherklemme nach Masse keinen Schutz bietet, ist eine Überwachung des Stromes durch die einzelnen Transistoren vorgesehen, die im Fehlerfall bei Auftreten des Kurzschlusses die Endstufe in einen sicheren Zustand führt. Die Reaktion besteht in der Abschaltung der Endstufe.

Weitere Vorteile ergeben sich aus der nachfolgenden Beschreibung von Ausführungsbeispielen sowie aus den abhängigen Ansprüchen.

### Zeichnung

Die Erfindung wird nachstehend anhand der in der Zeichnung dargestellten Ausführungsformen näher erläutert. Dabei zeigt Figur 1 ein Blockschaltbild eines Steuersystems zur Ansteuerung eines Leistungsstellelements, bei dem die erfindungsgemäße Vorgehensweise realisiert ist. Figur 2 zeigt anhand von Signalverläufen die Wirkung der erfindungsgemäßen Vorgehensweise im Vergleich zu herkömmlichen Ansteuersystemen. Figur 3 zeigt das Prinzip des Kurzschlußschutzes der kurzschlußfesten Endstufe.

### Beschreibung von Ausführungsbeispielen

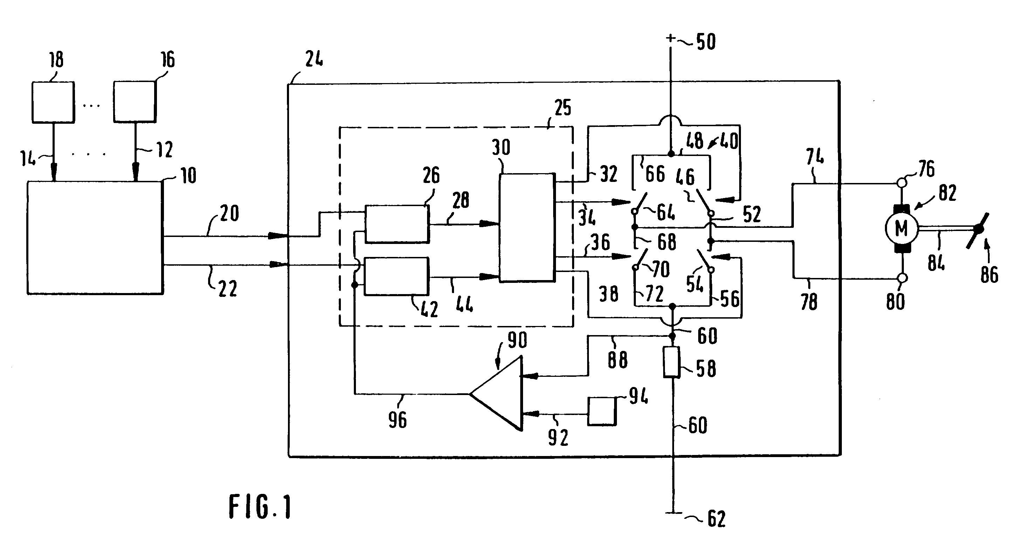

Figur 1 zeigt ein Übersichtsblockschaltbild eines Steuersystems zur Ansteuerung eines Leistungsstellelements, bei dem die erfindungsgemäße Vorgehensweise realisiert ist. Dabei ist mit 10 ein Rechenelement dargestellt, welches über die Eingangsleitungen 12 bis 14, welche das Rechenelement 10 mit Meßeinrichtungen 16 bis 18 verbindet, verfügt. Ferner weist das Rechenelement 10 Ausgangsleitungen 20 und 22 auf, welche auf eine Ansteuerschaltung 24 führen. Die Ausgangsleitung 20 führt dabei auf eine Logikeinheit 25, der außerdem die Leitung 22 und eine Leitung 96 zugeführt sind. Die vier Ausgangsleitungen 32, 34, 36 und 38 der Logikeinheit 25 führen auf jeweils ein Schaltelement einer Vollbrückenendstufe 40.

In einem bevorzugten Ausführungsbeispiel umfaßt die Logikeinheit 25 eine erste Logikschaltung 26, der die Leitung 20 zugeführt wird und deren Ausgangsleitung 28 auf eine Logikanordnung 30 führt, sowie eine zweite Logikschaltung 42, der die Leitung 22 zugeführt ist und deren Ausgangsleitung 44 ebenfalls auf die Logikanordnung 30 führt.

Die Vollbrückenschaltung besteht aus einem ersten Schaltelement 46, dem die Leitung 32 zugeordnet ist und welches über die Leitung 48 mit dem positiven Pol 50 der Betriebsspannung, andererseits über eine Leitung 52 mit einem zweiten Schaltelement 54 verbunden ist, dem die Leitung 38 zugeordnet ist und welches über die Leitung 56, den Meßwiderstand 58 sowie die Leitung 60 mit dem negativen Pol 62 der Betriebsspannung verknüpft ist. Ferner weist die Vollbrückenschaltung 40 ein drittes Schaltelement 64 auf, welches über die Leitung 66 mit dem positiven Pol 50 der Betriebsspannung, über die Leitung 68 mit dem vierten Schaltelement 70 verknüpft ist, welches über die Leitung 52, den Widerstand 58 und die Leitung 60 mit dem negativen Pol 62 der Betriebsspannung verbunden ist. Dabei ist dem Schaltelement 64 die Leitung 34 und dem Schaltelement 70 die Leitung 36 zugeordnet. Von der Leitung 68 führt eine Leitung 74 zum Anschlußpunkt 76 der Schaltungsanordnung 24, während von der Leitung 52 eine Leitung 78 zum Anschlußpunkt 80 der Schaltungsanordnung 24 führt. Zwischen den Anschlüssen 76 und 80 ist der elektrische Motor 82, vorzugsweise eine Gleichstrommotor, geschaltet, welcher über eine mechanische Verbindung 84 mit dem Leistungsstellelement 86, insbesondere einer Drosselklappe, verknüpft ist. Von der Leitung 60 führt eine Leitung 88 zur Erfassung des durch die Vollbrückenschaltung fließenden Stromes zum Komparator 90, dessen anderer Eingang mit der Leitung 92 beaufschlagt ist, welche den Komparator 90 mit einer Referenzspannungsquelle 94 verbindet. Die Ausgangsleitung 96 führt auf die Logikeinheit 25, dort jeweils auf die Logikschaltungen 26 und 42.

Abhängig von den von den Meßeinrichtungen 16 bis 18 erfaßten Betriebsgrößen, vorzugsweise Fahrpedalstellung, Drosselklappenstellung, Motordrehzahl, Motortemperatur, etc., bildet das Rechenelement 10 vorzugsweise im Rahmen einer Lageregelung Ausgangssignale zur Einstellung des Leistungsstellelements bzw. des Motors 82. Diese werden für die erste Drehrichtung über die Leitung 20, für die zweite Drehrichtung über die Leitung 22 an die Ansteuervorrichtung 24 in Form eines impulsförmigen, im bevorzugtem Ausführungsbeispiel pulsweitenmodulierten Signals abgegeben. Dabei legt die Pulsweite die Dauer der Bestromungsphase des Motors fest und somit die Einstellung des Leistungsstellelements. Dieses pulsweitenmodulierte Signal wird über die entsprechende Leitung auf die erste Logikschaltung 26 und 42 geführt und dort mit dem logischen Ausgangssignal des Komparators 90, welches über die Leitung 96 den Logikschaltungen zugeführt wird, verglichen. Dabei kannn die Logikschaltung 26 bzw. 42 dadurch aufgebaut werden, daß das pulsweitenmodulierte Signal invertiert und das invertierte pulsweidenmodulierte Signal mit dem Komparatorausgangssignalpegel über eine logische NOR-funktion verknüpft wird. Die Logikschaltung muß dabei die Funktion erfüllen, daß auf der Ausgangsleitung 28 bzw. 44 ein hoher Signalpegel ansteht, wenn das pulsweitenmodulierte Impulssignal einen hohen Signalpegel aufweist, der Komparatorausgangssignalpegel jedoch niedrig, in allen anderen Fällen das Signal auf der Leitung 28 bzw. 44 niedrigen Pegel aufweist, Dabei sind neben der oben erwähnten Realsierung auch andere Verknüpfungen vorteilhaft.

Der Signalpegel auf der Leitung 96 wird vom Komparator 90 durch Vergleich der über den Meßwiderstand 58 anfallenden Spannung mit der vom Element 94 erzeugten Referenzspannung gebildet. Diese Referenzspannung ist so festgelegt, daß der Spannungswert einem vorgegebenen Grenzwert des durch den Verbaucher und die Brücke fliessenden Stroms entspricht. Überschreitet die über den Meßwiderstand 58 abgefallene Spannung den Referenzspannungswert, so zeigt dies einen den vorgegebenen Grenzwert überschreitenden Strom an. Der Ausgangssignalpegel des Komparators 90 wechselt dann auf hohen Pegel. Weist der Komparatorausgang einen hohen Signalpegel auf, so sperren die logischen Schaltungen 26 bzw. 42 einen möglicherweise anstehenden hohen Signalpegel des pulsweitenmodulierten Signals, so daß die Ansteuerung solange unterbrochen ist, bis der Komparator seinen Pegel wieder wechselt, das heißt die am Widerstand 58 abgefallene Spannung unter den Referenzwert sinkt.

Die Logikanordnung 30 empfängt die über die Leitung 28 bzw. 44 zugeführten Signale und wählt entsprechend der ankommenden Signale die entsprechenden Leitungen zur Betätigung von Schaltelementen der Vollbrückenendstufe aus. Dabei wird bei positivem Signalpegel auf der Leitung 28 eine Bestromung in Vorwärtsrichtung ausgelöst, indem die Elemente 64 und 54 über die Leitungen 34 und 38 geschlossen werden, während beim negativen Signalpegel auf der Leitung 28 die Freilaufphase angenommen wird und entweder alle Schaltelemente geöffnet oder in einem bevorzugten Ausführungsbeispiel die Schaltelemente 64 und 46 über die Leitungen 34 und 32 geschlossen werden, so daß der Strom nicht zurück ins Bordnetz fließt, sondern sich in der Brücke freiläuft. Entsprechend werden von der Logikanordnung 30 die Signale auf der Leitung 44 behandelt, wobei ein positiver Signalpegel auf der Leitung 44 eine Betätigung des Motors in Rückwärtsrichtung anzeigt, so daß zur Bestromungsphase die Schaltelemente 70 und 46 über die Leitungen 32 und 36 geschlossen werden. Auch hier wird bei niedrigem Signalpegel auf der Leitung 44 die Freilaufphase angenommen und alle Schaltelemente geöffnet oder im bevorzugten Ausführungsbeispiele die Schaltelemente 64 und 46 geschlossen, damit der Strom nicht ins Bordnetz zurückfließt.

Überschreitet demnach der Spannungsabfall am Meßwiderstand 58 den eingestellten Wert, so wird die Endstufe in die Freilaufphase überführt, die Ansteuerung unterbrochen, so daß im Endeffekt der durch den Motor 82 fließende Strom auf den voreingestellten Wert begrenzt wird. Sobald der abgefallene Spannungswert den eingestellten unterschreitet, wechselt der Signalpegel am Ausgang des Komparators, so daß die Endstufe wieder freigegeben wird und der positive Signalpegel des pulsweitenmodulierten Signals seine Bestromungswirkung wiedererlangt und den Motor entsprechend betätigt.

Neben der dargestellten bevorzugten Ausführungsform kann in anderen Auführungsformen anstelle der dargestellten positiven Logik negative Logik eingesetzt werden, d.h. die Bestromungsphase kann durch einen niedrigen Pegel des Ansteuersignals auf den Leitung 20 und 22 und/oder den Leitungen 32, 34, 36, 38 ausgelöst werden, während der Freilaufphase hoher Signalpegel zugeordnet ist. Ferner kann der Komparator 90 über eine Hysterese verfügen.

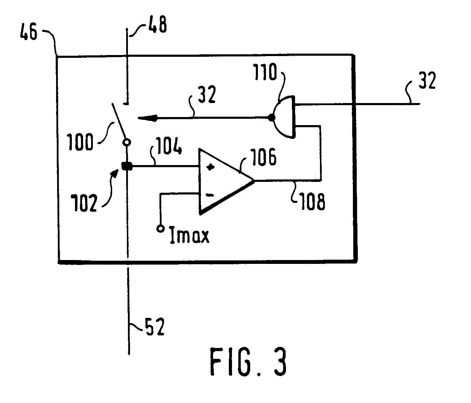

Das Prinzip des eingesetzten Kurzschlußschutzes ist in Fig. 3 gezeigt. Jedes der Schaltelemente 46, 54, 64 und 70 umfaßt Mittel zur Erfassung des durch das jeweilige Schaltelement fließenden Strom (z.B. durch den Einsatz sogenannter "current-sense-FETs"). Überschreitet der durch ein einzelnes Schaltelement fliessende Strom einen Kurzschlußstromschwellwert, wird zumindest dieses Schaltelement abgeschaltet. Diese Maßnahme bezüglich der Kurzschlußfestigkeit der Endstufe ist unabhängig von der Begrenzung des durch die Endstufe fliessenden Stroms. Am Beispiel des Schaltelements 46 der Transistor 100 mit Stromerfassung 102 gezeigt. Der erfaßte Strom wird über eine Leitung 104 auf einen Vergleicher 106 geführt. Dort wird er mit dem voreingestellten Stromwert Imax, dem Kurzschlußstrom, verglichen und ein Ausgangssignal erzeugt, wenn der erfaßte Strom den Grenzwert überschreitet. In einem NAND-Gatter 110 wird die Ausgangsleitung 108 des Vergleichers und die Ansteuerleitung 32 des Schaltelements 46 zusammengeführt. Die Ansteuerung des Transistors wird dadurch bei Überschreiten des Kurzschlußstromwertes im Kurzschlußfall unterbrochen. Das Zusammenspiel zwischen dieser Strombegrenzung durch die einzelnen Schaltelemente und der Strombegrenzung durch die gesamte Brücke ergibt sich daraus, daß bei Fehlerströmen, insbesondere Kurzschlußströmen, die durch Kurzschluß durch den elektrischen Verbraucher (Kurzschluß nach Plus) entstehen, der Strom durch den Verbraucher auf den Grenzwert begrenzt wird. Da diese Maßnahme beispielsweise bei einem Kurzschluß eine Verbraucherklemme nach Masse keinen Schutz bietet (z.B. Kurzschluß durch Transistor 64 bei Ansteuerung), ist eine Überwachung des Stromes durch die einzelnen Transistoren vorgesehen, die im Fehlerfall bei Auftreten des Kurzschlusses die Endstufe in einen sicheren Zustand führt. Die Reaktion besteht in der Abschaltung der Endstufe.

Durch die erfindungsgemäße Vorgehensweise der zusätzlichen Strombegrenzung einer kurzschlußfesten Endstufe wird ein Kappen der Einschalt- und Reversierstromspitze beim Verstellvorgang erreicht , ohne daß ein wesentlicher Verlust an Verstellzeit die Folge ist.

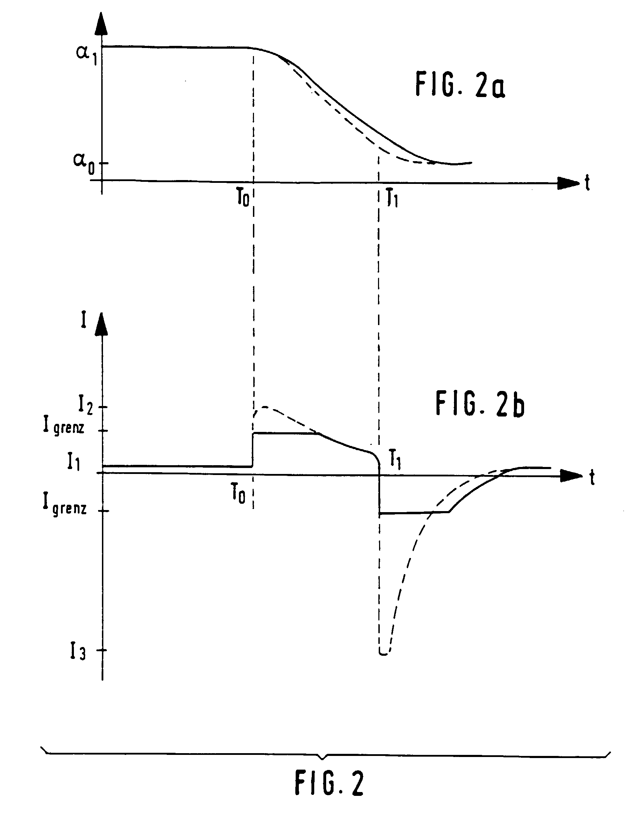

Dies ist anhand der Signalverläufe in Figur 2 am Beispiel der Steuerung eines Gleichstrommotors 82 von einer ersten Stellung auf eine zweite Position dargestellt. Dabei ist jeweils waagrecht die Zeit, in Figur 2a senkrecht der Stellung alpha des Leistungsstellements, der Drosselklappe, in Figur 2b der durch den Motor fließende Strom aufgetragen. Dabei wird angenommen, daß der Motor in einer Stellung alphal steht und von einem Strom I1 in dieser Position gehalten wird. Zum Zeitpunkt T0 erfolgt eine sprungförmige Veränderung des Ansteuersignals im Sinne eines Schließens der Drosselklappe. Dies hat eine abrupte Stromerhöhung zur Folge, der in einer Realisierungsform ohne die erfindungsgemäße Vorgehensweise den Wert I2 erreicht hätte (strichliert dargestellt). Durch die erfindungsgemäße Vorgehensweise wird dieser Strom wie durch die durchgezogene Linie dargestellt begrenzt, z.B. auf 5 A, so daß die strichliert gezeichnete Einschaltspitze vermieden wird. Danach setzt sich der Motor in Bewegung, so daß der Strom absinkt, bis der Motor seine Verstellgeschwindigkeit erreicht hat. Zum Zeitpunkt T1 wird der Motor gebremst, da er sich seiner neuen Position alpha0 nähert. Dies führt zu einer Gegenspannung, die in der Realisierungsform ohne die erfindungsgemäße Vorgehensweise die strichliert gezeichnete Stromspitze I3, z.B. -15 A, zur Folge hätte. Durch die erfindungsgemäße Vorgehensweise wird jedoch auch diese Reversierstromspitze begrenzt, z.B. auf -5 A oder einen anderen Wert. Danach pegelt sich der Strom langsam auf den Haltestrom ein, welcher im Bereich des vorherigen Stromwerts liegt. Anhand Figur 2a wird deutlich, daß die durch die erfindungsgemäße Vorgehensweise erreichte Verstellung des Motors nur unwesentlich von der strichliert gezeigten Verstellkurve ohne die erfindungsgemäße Vorgehensweise abweicht. Eine wesentliche Verringerung der Verstellzeit ist nicht zu erkennen.

Neben der dargestellten Ausführungsform bei der Steuerung einer Drosselklappe kann die erfindungsgemäße Vorgehensweise auch in Verbindung mit der Ansteuerung eines Einspritzpumpenhebels eines Dieselmotors Verwendung finden.

Ferner kann der Komparator 90 mit Meßwiderstand 58 und Referenzspannungsquelle 94 außerhalb des Endstufenbausteins 24 angebracht sein.

Ferner kann die erfindungsgemäße Vorgehensweise der Strombegrenzung auch mit anderen schaltungstechnischen Realisierungen einer Vollbrückenendstufe mit Ansteuerung Anwendung finden. Kurzschlußmaßnahmen sind aus Übersichtlichkeitsgründen nicht dargestellt, jedoch selbstverständlich im Rahmen der Endstufe realisiert.

Neben der Vorgabe eines Begrenzungswerts für positive und negative Ströme können in vorteilhafter Weise zwei Grenzwerte vorgesehen sein, z.B. kann zur Verstellung in Schließrichtung der Drosselklappe ein größerer Strom zugelassen werden.

Die Grenzwerte können in vorteilhafter Weise auch abhängig von Betriebsgrößen wie Brennkraftmaschinen, Motortemperatur, Wicklungstemperatur, Umgebungstemperatur Stellung der Drosselklappe, etc. vorgegebenen sein. Besonders kann die Strombegrenzung in einem vorteilhaften Ausführungsbeispiel durch den Rechner über eine nicht dargestellte Leitung in bestimmten Betriebssituationen aufgehoben werden, z.B. wenn die Drosselklappe klemmt oder festgefroren ist.

Die erfindungsgemäße Berenzung des Stromes ist dabei derart ausgebildet, daß im zeitlichen Mittel ein dem vorbestimmten Grenzwert entsprechender Strom durch den Verbraucher und die Endstufe fließt.

## Patentansprüche

1. Vorrichtung zur Ansteuerung der Drosselklappe einer Antriebseinheit eines Fahrzeugs,
- mit einer gegen Kurzschlüsse geschützten Vollbrückenendstufe (24), die einen mit der Drosselklappe verbundenen elektrischen Motor (82) mit Strom versorgt und die Schaltelemente (46, 54, 64, 70) umfaßt, die mittels wenigstens eines impulsförmigen Signals angesteuert werden,
- mit Strombegrenzungsmittel (90) für den durch die Vollbrückenendstufe und den angeschlossenen Motor fließenden Strom, der bei Überschreiten wenigstens eines voreingestellten Grenzwertes (94) durch Ausblenden der Ansteuerung auf diesen Grenzwert begrenzt wird, wobei die Ansteuerung bei Unterschreiten des Grenzwertes wieder aufgenommen wird,
- mit Kurzschlußüberwachungsmittel (106), die den Strom durch jedes Schaltelement der Endstufe überwachen und bei einem Kurzschluß in wenigstens einem der Schaltelemente die Vollbrückenendstufe abschalten.

2. Vorrichtung nach Anspruch 1, dadurch gekennzeichnet, daß das impulsförmige Ansteuersignal ein pulsweitenmoduliertes Signal ist.

3. Vorrichtung nach einem der vorhergehenden Ansprüche, dadurch gekennzeichnet, daß die Vollbrückenendstufe im Rahmen von Bestromungsphasen für die zwei Drehrichtungen des Motors mit einer Freilaufphase angesteuert wird.

4. Vorrichtung nach einem der vorhergehenden Ansprüche, dadurch gekennzeichnet, daß bei Überschreiten des wenigstens einen voreingestellten Grenzwertes während einer Bestromungsphase diese unterbrochen und die Freilaufphase eingeleitet wird, indem alle Schaltelemente geöffnet oder zwei gegenüberliegende Schaltelemente geschlossen werden.

5. Vorrichtung nach einem der vorhergehenden Ansprüche, dadurch gekennzeichnet, daß der wenigstens eine voreingestellte Grenzwert betragsmäßig kleiner ist als die Beträge der Spitzenwerte des Stromverlaufs im Normalbetrieb beim Verstellen des Gleichstrommotors.

6. Vorrichtung nach einem der vorhergehenden Ansprüche, dadurch gekennzeichnet, daß der Grenzwert abhängig von der Stromrichtung und/oder von Betriebsgrößen vorgegebenen ist.

7. Vorrichtung nach einem der vorhergehenden Ansprüche, dadurch gekennzeichnet, daß ein Rechenelement (10) vorgesehen ist, welche den Grenzwert in vorbestimmten Betriebssituationen aufheben oder betragsmäßig erhöhen kann.

8. Vorrichtung nach einem der vorhergehenden Ansprüche, dadurch gekennzeichnet, daß das zwischen Ausblenden und Wiedereinschalten der Ansteuerung bezüglich der Stromwerte eine Hysterese vorgesehen ist.

9. Vorrichtung nach einem der vorhergehenden Ansprüche, dadurch gekennzeichnet, daß Mittel (102) vorgesehen sind, die den Strom durch jedes Schaltelemente der Endstufe erfassen, mit einem Schwellwert vergleichen und bei Überschreitung wenigstens dieses Schaltelement abgeschlatet wird.

10. Vorrichtung nach einem der vorhergehenden Ansprüche, dadurch gekennzeichnet, daß die Vollbrückenschaltung in einem Endstufenbaustein integriert ist und die Strombegrenzung durch externe Beschaltung der Endstufe eingestellt wird.

## Claims

1. Device for driving the throttle valve of a drive unit of a vehicle,
- having a full-bridge output stage (24) which is protected against short circuits, supplies an electric motor (82), which is connected to the throttle valve, with current and comprises the switching elements (46, 54, 64, 70) which are driven by means of at least one pulsed signal,
- having current limiting means (90) for the current which flows through the full-bridge output stage and the connected motor and, when at least one preset limit value (94) is exceeded, is limited to this limit value as a result of blanking of the driving, the driving being resumed when the current falls below the limit value,
- having short-circuit monitoring means (106) which monitor the current through each switching element of the output stage and, in the event of a short circuit in at least one of the switching elements, switch the full-bridge output stage off.

2. Device according to Claim 1, characterized in that the pulsed drive signal is a pulse-width-modulated signal.

3. Device according to one of the preceding claims, characterized in that the full-bridge output stage is driven in the context of energization phases for the two directions of rotation of the motor together with a freewheeling phase.

4. Device according to one of the preceding claims, characterized in that when the at least one preset limit value is exceeded during an energization phase, the latter is interrupted and the freewheeling phase is initiated in that all the switching elements are opened or two opposite switching elements are closed.

5. Device according to one of the preceding claims, characterized in that the at least one preset limit value has a smaller magnitude than the magnitudes of the peak values of the current profile during normal operation when the DC motor is adjusted.

6. Device according to one of the preceding claims, characterized in that the limit value is predetermined as a function of the current direction and/or of operating parameters.

7. Device according to one of the preceding claims, characterized in that a computing element (10) is provided which can cancel the limit value in predetermined operating situations or can increase the magnitude of the said limit value.

8. Device according to one of the preceding claims, characterized in that hysteresis is provided between blanking and reactivating the driving as regards the current values.

9. Device according to one of the preceding claims, characterized in that means (102) are provided which detect the current through each switching element of the output stage and compare it with a threshold value, and when the latter is exceeded, at least this switching element is switched off.

10. Device according to one of the preceding claims, characterized in that the full-bridge circuit is integrated in an output stage module and the current limiting is set by external circuitry of the output stage.

## Revendications

1. Dispositif de commande du clapet d'étranglement d'une unité d'entraînement d'un véhicule,
• avec un étage final à pont complet (24),protégé contre les courts-circuits, qui alimente en intensité un moteur électrique (82) relié à un clapet d'étranglement, et qui comprend des éléments de commande (46, 54, 64, 70), qui sont commandés au moyen d'au moins un signal en forme d'impulsion,
• avec des moyens de limitation de l'intensité (90) pour l'intensité qui passe à travers l'étage final à pont complet et le moteur qui lui est raccordé, intensité qui est limitée en cas de dépassement d'au moins une valeur limite, réglée au préalable, (94) en fermant progressivement la commande sur cette valeur limite, la commande étant à nouveau activée lors du sous dépassement de la valeur limite,
• avec des moyens de contrôle de court-circuit (106), qui contrôlent l'intensité à travers chaque élément de commande de l'étage final et dans le cas d'un court-circuit débranchent au moins l'un des éléments de commande de l'étage à pont complet.

2. Dispositif selon la revendication 1,
caractérisé en ce que
le signal de commande en forme d'impulsion est un signal modulé en largeur.

3. Dispositif selon l'une des revendications précédentes,
caractérisé en ce que
l'étage final à pont complet est commandé dans le cadre des phases de mises sous courant dans les deux sens de rotation du moteur avec une phase de roue libre.

4. Dispositif selon l'une des revendications précédentes,
caractérisé en ce que
lors du dépassement d'au moins l'une des valeurs limites réglées au préalable pendant une phase de mises sous courant, on interrompt celle-ci et on introduit la phase de roue libre, en ouvrant tous les éléments de commande ou en fermant deux éléments de commande opposés.

5. Dispositif selon l'une des revendications précédentes,
caractérisé en ce que
l'une au moins des valeurs limites réglées au préalable est d'un montant plus petit que les montants des valeurs de pointe de l'intensité qui s'écoule en fonctionnement normal lors du mouvement de réglage du moteur à courant continu.

6. Dispositif selon l'une des revendications précédentes,
caractérisé en ce que
la valeur limite est prédéfinie en fonction du sens du courant et/ou de grandeurs de fonctionnement.

7. Dispositif selon l'une des revendications précédentes,
caractérisé en ce que
l'on prévoit un élément de calcul (10), qui peut supprimer ou augmenter le montant de la valeur limite dans des situations de fonctionnement prédéterminées.

8. Dispositif selon l'une des revendications précédentes,
caractérisé en ce que
l'arrêt progressif et le réenclenchement de la commande est pourvu en ce qui concerne les valeurs de l'intensité d'une hystérésis.

9. Dispositif selon l'une des revendications précédentes,
caractérisé en ce que
des moyens (102) sont prévus, qui détectent l'intensité qui passe à travers chaque élément de commande de l'étage final, la comparent à une valeur de seuil et en cas de dépassement débranchent au moins cet élément de commande.

10. Dispositif selon l'une des revendications précédentes,
caractérisé en ce que
le circuit à pont intégral est intégré dans un bloc d'étage final, et la limitation de l'intensité est réglée par la mise en circuit externe de l'étage final.
